# EUROPEAN PATENT SPECIFICATION

(11) **EP 0 277 431 B1**
(45) Date of publication and mention of the grant of the patent: **08.09.1993**
(21) Application number: 87311527.3
(22) Date of filing: 30.12.1987
(51) Int. Cl.: H02K 23/36

(54) **Two-speed motor**
Zwei-Drehzahlmotor
Moteur à deux vitesses

(30) Priority: 13.01.1987 US 2880
(43) Date of publication of application: 10.08.1988
(73) Proprietor: SIEMENS AUTOMOTIVE LIMITED, Chatham, Ontario N7M 5M7 (CA)
(72) Inventor: Kershaw, Peter A, Ontario N6K 1S4 (CA)
(74) Representative: Needle, Jacqueline

(56) References cited:
- FR-A- 2 122 132
- GB-A- 2 041 677
- US-A- 2 408 210
- PATENT ABSTRACTS OF JAPAN, vol. 4, no. 91 (E-17)[573], 28th June 1980; & JP-A-55 56 457

## Description

This invention relates to electric motors.

There is a requirement in the automotive industry for two-speed direct current (D.C.) motors. Such motors are used for example in engine cooling fan assemblies and generally, it is preferred to use a permanent magnet direct current (D. C.) electric motor to drive the fan. An engine cooling fan is normally driven at a low speed during normal operation of a vehicle. However, a high-fan speed is required under abnormal conditions for example when the vehicle is heavily loaded and the ambient temperature is high.

It is known to achieve the two-speed facility by applying a full voltage to the motor for high speed, and by dropping part of the voltage across a resistor placed in series with the motor for low speed. However, as a consequence, power is lost in the resistor, and the efficiency of the fan assembly is considerably reduced during low speed operation. This is undesirable, particularly since the motor operates at the lower speed for a greater percentage of the operating time.

GB-A-2041677 describes an electric motor comprising a housing, magnetic means carried by the housing, and an armature assembly within the housing, said armature assembly comprising a shaft rotatably mounted in the housing and first and second windings for causing rotation of said armature assembly, and comprising first commutator means connected to the first windings, second commutator means connected to the second windings, first brush means carried by the housing and co-operable with the first commutator means, and second brush means carried by the housing and co-operable with the second commutator means, and wherein means are provided for selectively connecting a voltage either to said first brush means alone or at least to said second brush means whereby the armature assembly can selectively be caused to rotate at either a first or a second speed.

Thus, in the known electric motor the same D.C. voltage can be applied to the motor in the first speed and in the second speed modes, thereby maintaining satisfactory efficiency in both modes. However, the two commutator means extend axially of the motor and thereby increase its axial extent. In many applications, such an increase in size is undesirable.

It is an object of the present invention to provide an electric motor which reduces the disadvantages of the known electric motor.

According to the present invention, an electric motor of the type defined above is characterised in that the armature assembly comprises a mounting plate extending radially from said shaft and carrying said first and second windings on one side thereof, in that one of said commutator means comprises a radially extending surface carried on said one side of said mounting plate, and in that the other of said commutator means comprises a cylindrical surface arranged coaxial with the shaft and located on the opposite side of the mounting plate.

An embodiment of the invention, arranged as a two-speed direct current motor, preferably has said first commutator means connected to cause the first brush means to supply direct current voltage to the first windings only to cause rotation of the armature assembly at a first speed, and the second commutator means connected to cause the second brush means to apply said direct current voltage to both the first and second windings to cause rotation of the armature assembly at a second speed.

In a preferred embodiment, said magnetic means comprise a plurality of permanent magnets carried by the housing, and said motor further comprises lamination means carried by said mounting plate and having a plurality of radially extending arms defining a plurality of coil receiving peripheral slots therebetween, and first and second coils being wound in said slots to form said first and second windings.

Preferably, said second brush means is arranged to apply said direct current voltage in series to both the first and second windings such that said second speed is slower than said first speed.

Preferably, the second windings are of smaller wire when compared with said first windings.

An embodiment of the present invention will hereinafter be described, by way of example, with reference to the accompanying drawings, in which:
Figure 1 shows a longitudinal sectional view of a two-speed permanent magnet direct current (D.C.) electric motor of the invention;
Figure 2 is an end view (partly broken away) of the motor from the right of Figure 1, the coil windings being omitted for clarity;
Figure 3 is a side view, partly in section, of the armature assembly of the motor of Figures 1 and 2 in a partially assembled condition;
Figure 4 is an electrical circuit diagram showing the connection of direct current voltage to coil windings to produce high speed motor operation; and
Figure 5 is an electrical circuit diagram showing the alternative connection of direct current voltage to coil windings to produce low speed motor operation.

Referring to the drawings, a two-speed permanent magnet direct current (D.C.) electric motor has a housing with a cylindrical body 12 and end plates 14, 16. Six arcuate permanent magnets 18 are secured at angularly spaced intervals to the interior of the housing body 12.

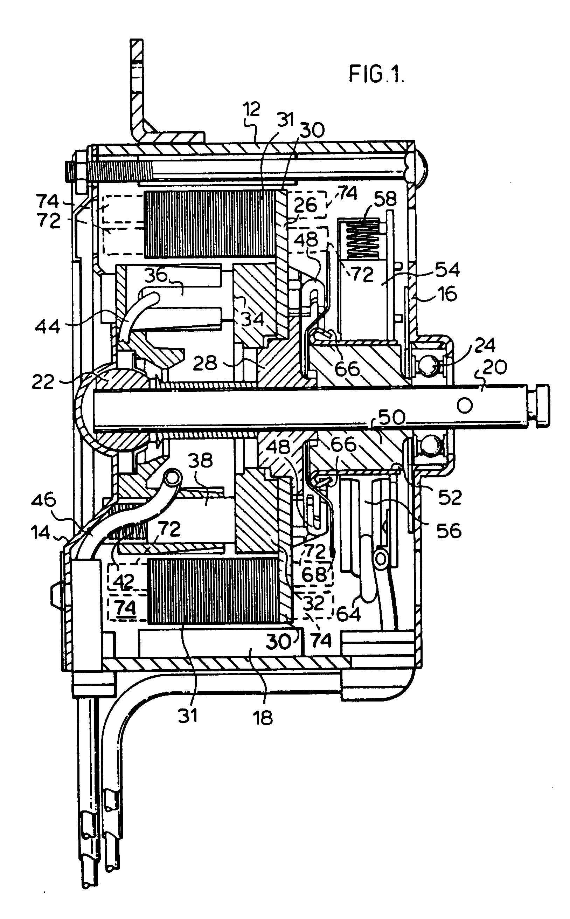

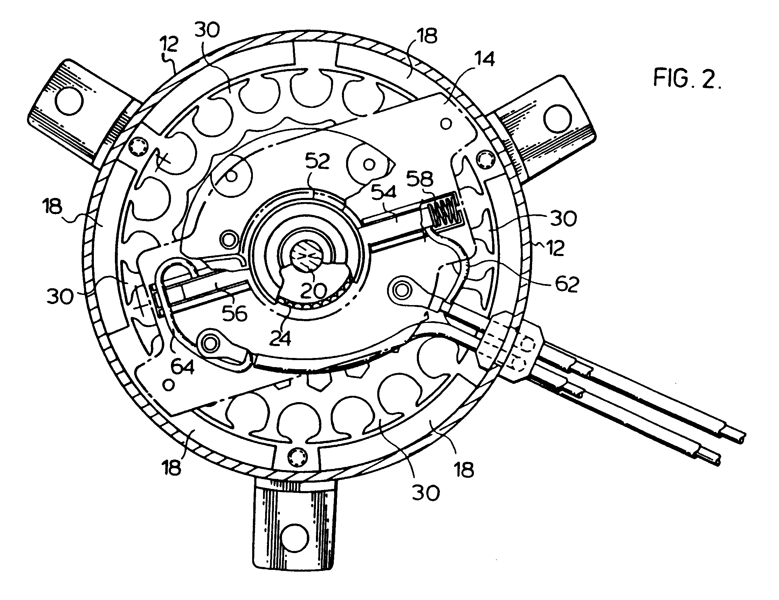

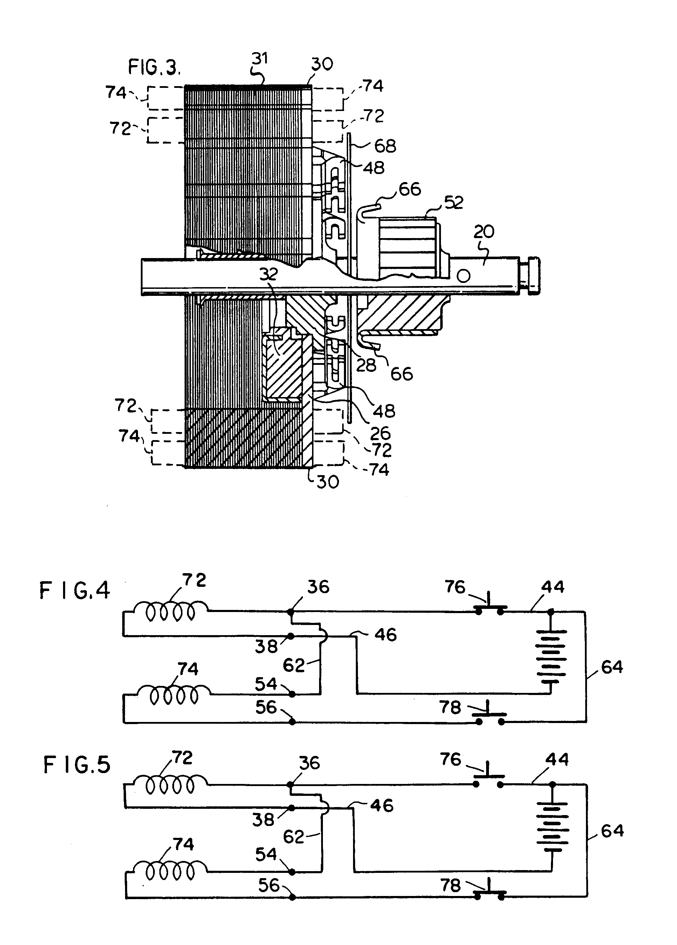

An armature assembly has a shaft 20 rotatably mounted in bearings 22, 24 carried by the end plates 14, 16 respectively. An armature mounting plate 26 is mounted on the shaft 20 through the intermediary of a hub 28. The armature mounting plate 26 has radially extending arms 30 spaced apart annularly by coil receiving slots, as shown in Figure 2. As best shown in Figure 1, a series of annular laminations 31 of similar shape provide the arms 30 with an axial extent sufficient to define cores around which two sets of coil windings, indicated at 72 and 74 in dotted lines in Figures 1 and 3, are wound. The low and high speed windings are not specifically shown in the drawings, but the nature of these windings will be readily apparent to a person skilled in the art from the following description.

A radially extending commutator 32 is carried by the armature mounting plate 26, the commutator 32 having a radially extending commutator surface provided by a set of commutator bars 34 successive opposite pairs of which are engaged by a pair of commutator brushes 36 and 38 carried by housing end plate 14. The brushes 36 and 38 are urged into engagement with successive opposed pairs of radially extending commutator bars 34 by springs 42. The commutator brushes 36 and 38 are connected to electrical leads 44 and 46 respectively. In accordance with conventional practice, the radially extending commutator 32 is provided with a number of commutator hooks 48 commensurate with the number of bars 34 through which the bars are electrically connected to the coil windings 72. As shown, hooks 48 project from the armature mounting plate 26 on the opposite side thereof from the commutator 32.

A cylindrical commutator 50 is mounted on the shaft 20 between the hub 28 and the housing end plate 16, the commutator 50 having a cylindrical commutator surface provided by a set of commutator bars 52 successive opposite pairs of which are engaged by a pair of commutator brushes 54 and 56 carried by housing end plates 16. The brushes 54 and 56 are urged into engagement with the cylindrical commutator bars 52 by springs 58 respectively. The commutator brushes 54 and 56 are connected to electrical leads 62 and 64 respectively. As before, the cylindrical commutator surface 52 is provided with a number of commutator hooks 66 commensurate with the number of bars 52 through which the bars are electrically connected to the coil windings 74. The hooks 66 are located adjacent the spacer 28.

A sheet of insulating material 68 is mounted on the shaft 20 between the hub 28 and the cylindrical commutator 50, the insulating sheet 68 extending in a radial direction between the radial commutator hooks 48 and the cylindrical commutator hooks 66.

The coils 72 and 74 are wound over the various arms 30 of the armature body 26 as indicated in Figures 1 and 3. One set of windings 72 is connected to the radial commutator hooks 48 and the other set of windings 74 is connected to the cylindrical connector hooks 66. During assembly of the armature, as shown in Figure 3, the first set of windings 72 is wound on the armature arms 30, and are connected to the radial commutator hooks 48. The insulator 68 is placed in position over the commutator hooks 48, and the cylindrical commutator 50 is slid onto the shaft 20.

The second set of windings is then wound on armature arms 30, and appropriate connections made to cylindrical commutator hooks 66. The cylindrical commutator 50 is then pushed to its assembled position adjacent hub 28. The completed armature can then be fitted into the motor housing.

As best shown in Figures 4 and 5, one brush 36 of commutator 32 is connectable by lead 44 through switch contacts 76 of a switch to a positive terminal of a direct current (D.C.) voltage and the other brush 38 is connected by lead 46 to the direct current (D.C.) negative terminal. One brush 54 of commutator 50 is connected by the lead 62 to brush 36 of commutator 32, and brush 56 is connectable by lead 64 through switch contacts 78 of the switch to the direct current (D.C.) positive terminal. Figure 4 illustrates the condition of switch contacts 76 and 78 during high speed operation. Thus, application of the direct current (D.C.) positive voltage to brush 36 of commutator 32 through closed switch contacts 76 with switch contacts 78 open causes current to be passed through the first set of coil windings 72 only so that the motor operates at a relatively high speed. Figure 5 illustrates the condition of switch contacts 76 and 78 during low speed operation. Application of the direct current (D.C.) positive voltage to brush 56 of commutator 50 through closed switch contacts 78 with switch contacts 76 open causes current to be passed through the first and second sets of coil windings 74 and 72 in series so that the motor operates at a relatively low speed.

The coil windings may be of any suitable type, for example wave windings or simple lap windings. Also, there may be any number of pairs of magnetic poles. In the present embodiment, the windings are wave windings, and require two brushes only per commutator. There are three pairs of poles or in other words a total of six magnet poles. From the above, the specific manner of winding the coil windings 72 and 74 in the armature slots defined by the spaced arms 30 and of electrically connecting the same to the associated commutator hooks 48 and 66 respectively will be readily apparent to those skilled in the art.

In use in connection with an engine fan cooling assembly, the motor will usually be operated at the low speed. When predetermined abnormal conditions occur, a direct current (D.C.) voltage is applied to the radial commutator 32 and hence to the high speed windings to cause the motor to operate at the high speed. A change from low to high speed and vice-versa may be controlled in any suitable manner, for example by a thermostat which senses engine temperature or engine coolant temperature.

Since the same direct current (D.C.) voltage is applied to the motor for both low and high speed modes of operation, a satisfactory efficiency can be achieved at low speed as well as high speed. Typical test results have shown low and high speed efficiencies in the low to mid-sixty percentage range.

The second coil windings 74 may use wire of smaller diameter than wire used in the first coil windings 72. The combination of the effective increase in total number of wire turns per coil and the reduction of wire diameter will have the effect of lowering the speed of rotation of the armature under zero load conditions and of lowering the load required to "stall" or reduce the speed of rotation of the armature to zero. This characteristic has the effect of lowering the speed of rotation of the armature for any given load with little change in armature efficiency. Identical wire diameters for both coil windings would allow only a lowering of the armature speed under zero load conditions and would not cause a change in the torque to stall the armature.

In the embodiment described and illustrated above, the high speed is achieved by using one set of coil windings only and the low speed is achieved by using the first and second sets of coil windings in series. Alternatively, especially when the first and second coil windings are identical in number of turns per coil and wire diameter, the high speed may be achieved by connecting the first and second sets of coil windings in parallel, i.e. by applying the same direct current (D.C.) voltage to both commutators, and the low speed may be achieved by removing the direct current (D.C.) voltage from one of the commutators so as to use one set of coil windings only. However, motor efficiency at low speed will be lower than in the previous embodiment.

Other embodiments of the invention will be readily apparent to a person skilled in the art, the matter for which protection is sought being defined in the appended claims.

## Claims

1. An electric motor comprising a housing (12, 14, 16), magnetic means (18) carried by the housing, and an armature assembly (20, 26) within the housing, said armature assembly comprising a shaft (20) rotatably mounted in the housing and first and second windings (72, 74) for causing rotation of said armature assembly, and comprising first commutator means (32) connected to the first windings (72), second commutator means (50) connected to the second windings, first brush means (36, 38) carried by the housing and co-operable with the first commutator means (32), and second brush means (56) carried by the housing and cooperable with the second commutator means (50), and wherein means are provided for selectively connecting a voltage either to said first brush means (36, 38) alone or at least to said second brush means (56) whereby the armature assembly can selectively be caused to rotate at either a first or a second speed, characterised in that the armature assembly comprises a mounting plate (26) extending radially from said shaft (20) and carrying said first and second windings (72, 74) on one side thereof, in that one of said commutator means comprises a radially extending surface (34) carried on said one side of said mounting plate (26), and in that the other of said commutator means comprises a cylindrical surface (52) arranged coaxial with the shaft (20) and located on the opposite side of the mounting plate (26).

2. An electric motor as claimed in Claim 1, arranged as a two-speed direct current motor, wherein said first commutator means (32) is connected to cause the first brush means (36, 38) to supply direct current voltage to the first windings (72) only to cause rotation of the armature assembly (20, 26) at a first speed, and the second commutator means (50) is connected to cause the second brush means (56) to apply said direct current voltage to both the first and second windings to cause rotation of the armature assembly (20, 26) at a second speed.

3. A two-speed direct current electric motor as claimed in Claim 2, wherein said magnetic means comprise a plurality of permanent magnets (18) carried by the housing, and further comprising lamination means (31) carried by said mounting plate (26) and having a plurality of radially extending arms (30) defining a plurality of coil receiving peripheral slots therebetween, and first and second coils being wound in said slots to form said first and second windings.

4. A two-speed direct current electric motor as claimed in Claim 2 or 3, wherein said second brush means (56) is arranged to apply said direct current voltage in series to both the first and second windings such that said second speed is slower than said first speed.

5. An electric motor as claimed in any preceding claim, wherein the second windings are of smaller wire when compared with said first windings.

## Patentansprüche

1. Elektromotor mit einem Gehäuse (12, 14, 16), mit am Gehäuse angeordneten Magneten (18) und einem Anker (20, 26) in dem Gehäuse, wobei der Anker eine drehbar im Gehäuse gelagerte Welle (20) und erste und zweite Wicklungen (72, 74) zwecks Rotation des Ankers aufweist, und einen an die ersten Wicklungen (72) angeschlossenen ersten Kommutator (32) und einen an die zweiten Wicklungen angeschlossenen zweiten Kommutator (50), erste Bürsten (36, 38) am Gehäuse für den ersten Kommutator (32) und zweite Bürsten (56) am Gehäuse für den zweiten Kommutator (50), wobei Mittel zum wahlweisen Anlegen einer Spannung entweder allein an die ersten Bürsten (36, 38) oder mindestens an die zweiten Bürsten (56) vorgesehen sind, so daß der Anker wahlweise mit einer ersten oder einer zweiten Drehzahl rotiert, dadurch gekennzeichnet, daß der Anker eine sich radial von der Welle (20) erstreckende Montageplatte (26) aufweist, die auf einer Seite die ersten und zweiten Wicklungen (72, 74) trägt, daß einer der Kommutatoren eine sich radial erstreckende Fläche (34) auf der einen Seite der Montageplatte (26) aufweist und daß der andere Kommutator eine zylindrische Fläche (52) aufweist, die koaxial zur Welle (20) liegt und auf der gegenüberliegenden Seite der Montageplatte (26) angeordnet ist.

2. Elektromotor nach Anspruch 1 als Gleichstrommotor für zwei Drehzahlen, wobei der erste Kommutator (32) so angeschlossen ist, daßvon den ersten Bürsten (36, 38) Gleichspannung nur an die ersten Wicklungen (72) zwecks Rotation des Ankers (20, 26) mit einer ersten Drehzahl angelegt wird und der zweite Kommutator (50) so angeschlossen ist, daß von den zweiten Bürsten (56) die gleiche Spannung an beide erste und zweite Wicklungen zwecks Rotation des Ankers (20, 26) mit einer zweiten Drehzahl angelegt ist.

3. Gleichstromelektromotor für zwei Drehzahlen nach Anspruch 2, wobei die Magnete mehrere am Gehäuse angeordnete Permanentmagnete (18) aufweisen und ferner an der Montageplatte (26) angeordnete Lamellen (31) sowie mehrere sich radial erstreckende Arme (30) vorgesehen sind, die zwischen sich mehrere Nuten am Umfang zur Aufnahme von Spulen bilden und die ersten und zweiten Wicklungen von in den Nuten eingesetzten ersten und zweiten Spulen gebildet sind.

4. Gleichstromelektromotor für zwei Drehzahlen nach Anspruch 2 oder 3, wobei über die zweiten Bürsten (56) die Gleichspannung in Reihe an beide erste und zweite Wicklungen derart angelegt wird, daß die zweite Drehzahl kleiner ist als die erste Drehzahl.

5. Elektromotor nach einem der vorhergehenden Ansprüche, wobei die Drähte für die zweiten Wicklungen schwächer sind als für die ersten Wicklungen.

## Revendications

1. Un moteur électrique comprenant un carter (12, 14, 16), des moyens magnétiques (18) supportés par le carter, et un assemblage d'induit (20, 26) à l'intérieur du carter, cet assemblage d'induit comprenant un arbre (20) qui est monté de façon tournante dans le carter et des premiers et seconds enroulements (72, 74) pour faire tourner l'assemblage d'induit, et comprenant un premier collecteur (32) connecté aux premiers enroulements (72), un second collecteur (50) connecté aux seconds enroulements, des premiers balais (36, 38) supportés par le carter et pouvant coopérer avec le premier collecteur (32), et des seconds balais (56) supportés par le carter et pouvant coopérer avec le second collecteur (50), et dans lequel des moyens sont incorporés pour appliquer sélectivement une tension soit aux premiers balais (36, 38) seuls, soit au moins aux seconds balais (56), grâce à quoi l'assemblage d'induit peut être mis sélectivement en rotation à une première vitesse ou à une seconde vitesse, caractérisé en ce que l'assemblage d'induit comprend une plaque de montage (26) qui s'étend en direction radiale à partir de l'arbre (20) et qui porte les premiers et seconds enroulements (72, 74) de l'un de ses côtés, en ce que l'un des collecteurs comprend une surface (34) s'étendant en direction radiale, qui est portée par le côté précité de la plaque de montage (26), et en ce que l'autre collecteur comprend une surface cylindrique (52) disposée de façon coaxiale par rapport à l'arbre (20) et située du côté opposé de la plaque de montage (26).

2. Un moteur électrique selon la revendication 1, réalisé sous la forme d'un moteur à courant continu à deux vitesses, dans lequel le premier collecteur (32) est connecté pour que les premiers balais (36, 38) appliquent une tension continue aux premiers enroulements (72) seule-ment, pour faire tourner l'assemblage d'induit (20, 26) à une première vitesse, et le second collecteur (50) est connecté de façon que les seconds balais (56) appliquent la tension continue à la fois aux premiers et seconds enroulements, pour faire tourner l'assemblage d'induit (20, 26) à une seconde vitesse.

3. Un moteur électrique à courant continu à deux vitesses selon la revendication 2, dans lequel les moyens magnétiques comprennent un ensemble d'aimants permanents (18) supportés par le carter, et comprenant en outre un assemblage de tôles (31) qui sont supportées par la plaque de montage (26) et comportent un ensemble de branches (30) s'étendant en direction radiale qui définissent entre elles un ensemble d'encoches périphériques de réception de bobines, et des premières et secondes bobines étant enroulées dans les encoches précitées, pour former les premiers et seconds enroulements.

4. Un moteur électrique à courant continu à deux vitesses selon la revendication 2 ou 3, dans lequel les seconds balais (56) sont conçus pour appliquer la tension continue en série à la fois aux premiers et seconds enroulements, de façon que la seconde vitesse soit inférieure à la première vitesse.

5. Un moteur électrique selon l'une quelconque des revendications précédentes, dans lequel les seconds enroulements sont en fil plus fin que celui des premiers enroulements.
